# EUROPÄISCHE PATENTSCHRIFT

(11) **EP 2 126 519 B1**
(45) Veröffentlichungstag und Bekanntmachung des Hinweises auf die Patenterteilung: **29.05.2019**
(21) Anmeldenummer: 08701352.0
(22) Anmeldetag: 09.01.2008
(51) Int. Cl.: G01D 11/30, B60R 21/01

(54) **UNFALLSENSOR**
ACCIDENT SENSOR
DÉTECTEUR D'ACCIDENT

(30) Priorität: 23.02.2007 DE 102007008862
(43) Veröffentlichungstag der Anmeldung: 02.12.2009
(73) Patentinhaber: Robert Bosch GmbH, 70442 Stuttgart (DE)
(72) Erfinder: BRANDT, Tobby, 71034 Boeblingen (DE); OHL, Christian, 72793 Pfullingen (DE); ADAM, Boris, 71126 Gaeufelden (DE); SCHUERER, Martin, 72631 Aichtal (DE)
(86) Internationale Anmeldenummer: PCT/EP2008/050188
(87) Internationale Veröffentlichungsnummer: WO 2008/101746

(56) Entgegenhaltungen:
- DE-C1- 19 531 262
- DE-C1- 19 963 912
- FR-A- 2 808 327

## Beschreibung

### Stand der Technik

Die Erfindung betrifft ein Fahrzeug mit einem Unfallsensor nach der Gattung des unabhängigen Patentanspruchs.

Aus DE 199 23 985 A1 ist eine Sensorbaugruppe bekannt, bei der das Gehäuse eines Luftdrucksensors, der zur Seitenaufprallsensierung verwendet wird, über Befestigungsmittel, beispielsweise Schrauben, an einer Wand im Fahrzeug befestigt wird.

Auch DE 101 06 311 A1 lehrt, dass ein Luftdrucksensor in der Tür an einer Trennwand zwischen Nassraum und Trockenraum in der Tür eingebaut wird. Dabei ragt ein Druckkanal in den Nassraum hinein, während der Luftdrucksensor sich im Trockenraum befindet. Es ist ein Dichtkissen vorgesehen, dass das Gehäuseinnere gegen den Drucksensor abdichtet und auch das Gehäuse gegen die Trennwand.

Aus der FR 2808327 ist eine Befestigungsvorrichtung bekannt, die in einen Befestigungskragen mit einer Öffnung derart passt, dass ein Sensorelement in seiner Messposition gehalten wird. Das Befestigungselement weist eine Bayonettfixierelement auf, das um die Öffnung des Befestigungskragen anliegt, um das Befestigungselment zu fixieren. Die Offenbarung betrifft im Speziellen die Befestigung eines Temperatursensors im Einlass eines Fahrzeugsverdichtungsmotors.

Aus der DE 199 63 912 C1 ist eine Steckvorrichtung mit Rastverbindung bekannt, die gegen axiales Herauspressen eines Aggregatsteckers aus einem Aufnahmeteil gesichert ist. Dies geschieht durch eine Steckernoppe die sich im eingebauten Zustand in einer Quernut befindet. Eine Weiterbildung der Steckernoppe und der Quernut zu einem Bajonettverschluss und ein Betätigungsabschnitt an einem Federlappen bieten erhöhte Sicherheit gegen axiales Herauspressen des Aggregatsteckers.

Aus der DE 195 31 262 ist eine Verbindungsanordnung für zwei zueinander verdrehbare Bauteile bekannt, von denen ein gehäuseartiges Bauteil eine zylindrische Aufnahmebohrung und benachbart dazu eine rechteckige Aufnahme aufweist und das andere einsetzbare Bauteil einen zylindrischen Zapfen und benachbart dazu eine rechteckige Platte aufweist und wobei ein Einsetzen in die Aufnahme bei um 90 Grad verdrehter Anordnung erfolgt und durch Verdrehen um 90 Grad eine Verriegelung beider Bauteile erfolgt, ist die benachbart zur zylindrischen Aufnahmebohrung angeordnete rechteckige Aufnahme eine Schwalbenschwanzführung und die rechteckige Platte ist eine rechteckige Federplatte, deren Breite etwas kleiner ist als die Eintrittsbreite und deren Länge etwas kleiner ist als die Basisbreite (B2) der Schwalbenschwanzführung und die Federplatte ist an gegenüberliegenden Ecken mit Abrundungen versehen deren Radius kleiner als die halbe Breite ist.

### Offenbarung der Erfindung

Der Unfallsensor des erfindungsgemäßen Fahrzeugs mit den Merkmalen des unabhängigen Patentanspruchs hat demgegenüber den Vorteil, dass Befestigungsmittel vorgesehen sind, die ein Einführen durch eine Öffnung in der Wand ermöglichen und dann ein Drehen bis zu einem bestimmten Anschlag, der damit die Endposition definiert. In der Endposition sind die Befestigungsmittel derart konfiguriert, dass ein Zurückdrehen des Unfallsensors verhindert wird und damit ein fester Einbau ermöglicht wird. Durch diese Konfiguration können teure Schraubverbindungen vermieden werden. Der Unfallsensor ist in der Endposition bestimmungsgemäß befestigt.

Diese Befestigungsmittel ermöglichen einen sehr einfachen und einen gleichzeitig sicheren Einbau des Unfallsensors. Auch können zusätzliche Verbauabsicherungen entfallen. Solche Verbauabsicherungen wären eine Drehmomentüberwachung, optische Kontrollen der Nieten und ähnliches. Es ist insbesondere eine Einhandmontage möglich, da kein Werkzeug mit der anderen Hand benutzt werden muss.

Der Unfallsensor ist insbesondere, wie im Stand der Technik angegeben, ein Luftdrucksensor, es kann sich jedoch auch um einen Beschleunigungssensor, eine Umfeldsensorik oder eine Körperschallsensorik handeln.

Die Befestigungsmittel sind gemäß den Merkmalen von Patentanspruch 1 definiert. Sie müssen das Einführen des Unfallsensors durch die Öffnung in der Wand ermöglichen und dann das Drehen, den Anschlag und das Verhindern des Zurückdrehens aus der Endposition heraus. Beispiele für solche Befestigungsmittel sind beispielsweise ein modifizierter Bajonettverschluss, der ein Zurückdrehen verhindert.

Unter einem Anschlag ist eine mechanische Struktur zu verstehen, die es verhindert, dass der Unfallsensor weiter gedreht werden kann.

Durch die in den abhängigen Ansprüchen angegebenen Maßnahmen und Weiterbildungen sind vorteilhafte Verbesserungen des im unabhängigen Patentanspruch angegebenen Fahrzeugs mit Unfallsensor möglich.

Besonders vorteilhaft ist, dass die Befestigungsmittel des Fahrzeugs eine mechanische Codierung aufweisen, die das Einführen des Unfallsensors in einer einzigen Winkellage erlauben. Dadurch ist der Unfallsensor dann schon für das Drehen richtig orientiert. Diese mechanische Codierung kann durch eine entsprechende Formung der Befestigungsmittel erreicht werden. Dafür können beispielsweise Halteflügel verwendet werden, die auch die Funktion aufweisen, den Drucksensor im eingebauten Zustand, also in der Endposition, zu halten. Dabei können insbesondere zwei Halteflügel vorgesehen sein, und diese beiden Halteflügel sind dann unterschiedlich geformt, beispielsweise mit unterschiedlichen Breiten versehen. Anstatt von Halteflügeln können jedoch auch andere Strukturen verwendet werden.

Der Unfallsensor weist insbesondere Dichtmittel auf, beispielsweise einen Dichtring, der die Öffnung dann zusätzlich abdichtet. Dies ist insbesondere dann von Vorteil, wenn sich der Luftdrucksensor selbst im Nassraum befindet und die Öffnung in den Trockenraum führt.

Die Dichtmittel können vorzugsweise bezüglich ihrer Härte und/oder ihrer Form zur Aufnahme der Haltekraft konfiguriert sein, um mit den Halteflügeln dann eine optimale Kraftverteilung auf beiden Seiten der Wand in der Fahrzeugtür zu erreichen. Die Härte kann beispielsweise durch entsprechende Weichmacher eingestellt werden. Bei Silikonen, die als Dichtringmaterial verwendet werden, können verschiedene Härtegrade eingestellt werden. Dies ist durch den sogenannten Shore-Index gekennzeichnet. Bezüglich der Formung der Dichtmittel können beispielsweise Dichtringe spitz oder breit ausgeführt sein, um somit mehr oder weniger Kraft aufnehmen zu können.

Die Befestigungsmittel können wenigstens eine mechanische Rippe aufweisen, die ein Drehen des Unfallsensors nur in einer Richtung nach dem Einführen ermöglicht. Eine solche Rippe ist beispielsweise halbkreisförmig gebildet und ermöglicht so, dass eine Lasche, die letztlich in der Endposition zum Einrasten führt, nur in einer Richtung gedreht werden kann, da die Lasche ansonsten gegen die Rippe stoßen würde. Diese Lasche ermöglicht vorzugsweise in der Endposition ein Einrasten, beispielsweise unter Einwirkung einer Federkraft, deren Rückstellkraft die Lasche in der Endposition festhält. Damit wird dann ein Zurückdrehen des Unfallsensors aus dieser Endposition verhindert.

Erfindungsgemäß ist der Unfallsensor derart geformt, dass er mit Strukturen der Wand es nur ermöglicht, die Kabel an den Unfallsensor anzuschließen, wenn der Unfallsensor seine Endposition erreicht hat. Dies wird durch einen Falz in der Wand, die beispielsweise aus Blech gebildet ist, erreicht, sodass der Falz verhindert, dass ein Anschließen des Kabels in einer anderen Position als der Endposition möglich ist.

Vorteilhafterweise ist es möglich, dass der Unfallsensor eine Markierung aufweist, die ein Erkennen der Endposition ermöglicht. Diese Markierung kann beispielsweise durch eine Bohrung in der Wand nur in der Endposition für einen Monteur erkennbar sein.

Diese optische Markierung kann im Boden des Sensors vorgesehen werden, beispielsweise innerhalb des durch die Dichtmittel abgedichteten Bereichs.

Der Falz kann typischerweise im Türblech eingeprägt werden, sodass er mechanisch verhindert, dass der Stecker auf den Sensor gesteckt werden kann, solange dieser nicht in die Endposition gedreht wird.

Weiter ist es möglich, eine zusätzliche Befestigungslasche am Sensor vorzusehen, falls der sichere Verbau im Fahrzeug über beispielsweise eine zusätzliche Schraube oder Niet abgesichert werden soll. Die zusätzliche Sicherung per Schraube erlaubt über beispielsweise eine Überwachung und Aufzeichnung des Drehmoments auch die elektronische Rückverfolgbarkeit des korrekten Verbaus im Fahrzeug.

Zusammengefasst ist es daher möglich, dass der erfindungsgemäße Unfallsensor nach seinen Ausprägungen gemäß der abhängigen Ansprüche folgende Kriterien erfüllt:
1. Der Unfallsensor darf nur in einer einzigen Winkellage in die Öffnung der Wand einführbar sein.
2. Der Unfallsensor kann nur in einer Richtung nach dem Einführen gedreht werden.
3. In der Endposition muss ein Anschlag ein Überdrehen verhindern.
4. Der Unfallsensor muss beim Erreichen der Endposition hörbar einrasten. Das akustische Signal wird dabei durch einen geeignet ausgelegten Klips verursacht.
5. Der Unfallsensor kann vorteilhafterweise so ausgelegt sein, dass er sich nicht beziehungsweise nur mit Beschädigungen wieder lösen lässt, wenn er einmal die Endposition erreicht hat.
6. Der Unfallsensor sowie die Befestigungsmittel sollten so ausgelegt sein, dass der Unfallsensor nur mit Kabeln beziehungsweise Gegenstecker kontaktierbar ist, wenn er seine Endposition erreicht hat.
7. Der Unfallsensor kann über eine zusätzliche Sicherungslasche verfügen, die eine zusätzliche Verschraubung ermöglicht.

Die Lasche des Unfallsensors, die in der Endposition einrastet, ist als Klipslasche ausgebildet. Dieser Klips stellt dann sicher, dass der Unfallsensor nicht mehr aus der Endposition herausgedreht werden kann beziehungsweise nur herausdreht werden kann, wenn dabei der Klips zerstört wird.

Ausführungsbeispiele der Erfindung sind in der Zeichnung dargestellt und werden in der nachfolgenden Beschreibung näher erläutert.

Es zeigen
Figur 1 eine Aufsicht auf den erfindungsgemäßen Unfallsensor,
Figur 2 eine Ansicht der Wand mit der Öffnung und dem Falz,
Figur 3a bis c die Montage des Unfallsensors,
Figur 4a bis f ebenfalls Montageschritte des Unfallsensors,
Figur 5 eine Seitenansicht des montierten Unfallsensors und
Figur 6 eine weitere Seitenansicht des montierten Unfallsensors.

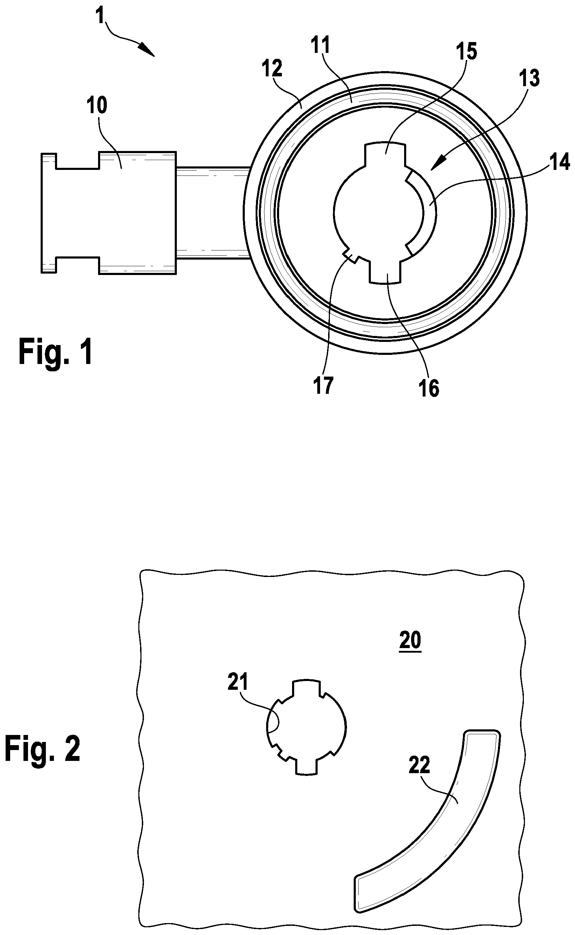

Figur 1 zeigt eine Draufsicht auf den erfindungsgemäßen Unfallsensor 1, der vorliegend als Luftdrucksensor zur Seitenaufprallerkennung beschrieben wird. Alternativ sind, wie oben angegeben, andere Unfallsensortypen möglich. Der Unfallsensor 1 weist einen Steckerteil 10 auf und einen Hauptkörper 12, in dem sich das Drucksensorelement und eine angeschlossene Elektronik befinden. Vorliegend ist die Seite im Nassraum gezeigt, die die Befestigungsmittel aufweist. Die Befestigungsmittel sind innerhalb eines Dichtrings 11 aus den Dichtmitteln vorgesehen. Der Dichtring 11 ist hier als Ring vorgesehen. Es ist möglich, auch eine rechteckige Dichtung vorzusehen oder andere geeignete Formen. Die Befestigungsmittel weisen hier eine Scheibe 13 mit Halteflügeln 15 und 16 auf, wobei der Halteflügel 15 erheblich breiter als der Halteflügel 16 ist. Weiterhin ist eine mechanische Rippe 14 zu sehen, die verhindert, dass der Unfallsensor beim Einbau in eine falsche Richtung gedreht wird. Darüber hinaus ist eine Lasche 17 angegeben, die in der Endposition einrasten wird und so ein Zurückdrehen des Unfallsensors verhindert. Die Halteflügel 15 und 16 sind unterschiedlich geformt, um eine mechanische Codierung vorzugeben, sodass der Luftdrucksensor 1 nur in einer bestimmten Winkellage in die Wand durch die Öffnung eingeführt werden kann, da die Öffnung in der Wand dieser Formung der Halteflügel entspricht. Die Befestigungsmittel sind vorliegend aus Kunststoff gefertigt. Der Dichtring 11 ist, wie oben angegeben, aus Silikon ausgebildet. Andere Kunststoffe sind möglich. Der Hauptkörper 12 des Luftdrucksensors ist metallisch, wobei auch hier Kunststoffe verwendet werden können.

Figur 2 zeigt eine Ansicht der Wand 20 mit einer Öffnung 21 und einem Falz 22, der in die Wand aus Blech eingeprägt ist. Die Öffnung 21 ist bezüglich ihrer Formung den Befestigungsmitteln 13 bis 17 nachgeformt, sodass der Drucksensor 1 mit den Befestigungsmitteln 13 bis 17 nur in einer bestimmten Winkellage durch die Öffnung 21 hindurchgeführt werden kann. Der Drucksensor 1 wird dabei gegen die Wand 20 gedrückt, beispielsweise durch Anpressen der Dichtung 11. Der eingeprägte Falz 22 verhindert, dass elektrische Kabel an den Stecker 10 angeschlossen werden können, solange der Drucksensor 1 noch nicht die Endposition erreicht hat.

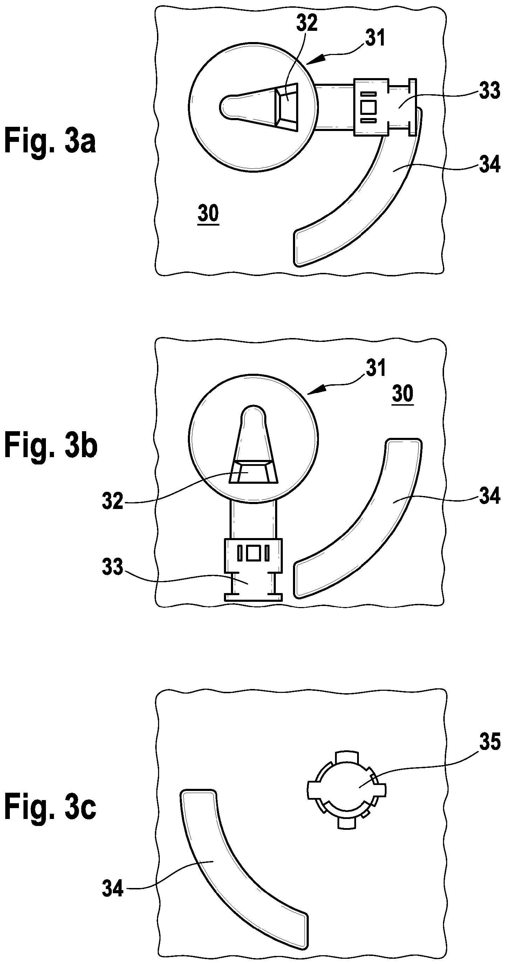

Die Figuren 3a bis c zeigen den Einbau des erfindungsgemäßen Unfallsensors. In Figur 3a ist gezeigt, wie der Sensor durch die Öffnung in der Wand 30 hindurchgeführt wird. Dargestellt ist hier die Betrachtung von der Nassraumseite, in der sich der Drucksensor beispielhaft befindet. Der Drucksensor weist ein Steckerteil 33, einen Druckeinlasskanal 32 und einen Körper 31 auf. Dargestellt ist hier auch der Falz 34, der verhindert, dass Kabel in dieser Einbauposition angeschlossen werden können.

In Figur 3b, die die gleichen Elemente mit den gleichen Bezugszeichen darstellt, hat der Sensor nunmehr die Endposition erreicht und damit auch den Falz 34 verlassen, sodass die Kabel angeschlossen werden können. Es ist eine Drehung um 90 Grad erfolgt.

Figur 3c zeigt die Ansicht vom Trockenraum und wie die Befestigungsmittel 35 die Öffnung ausfüllen.

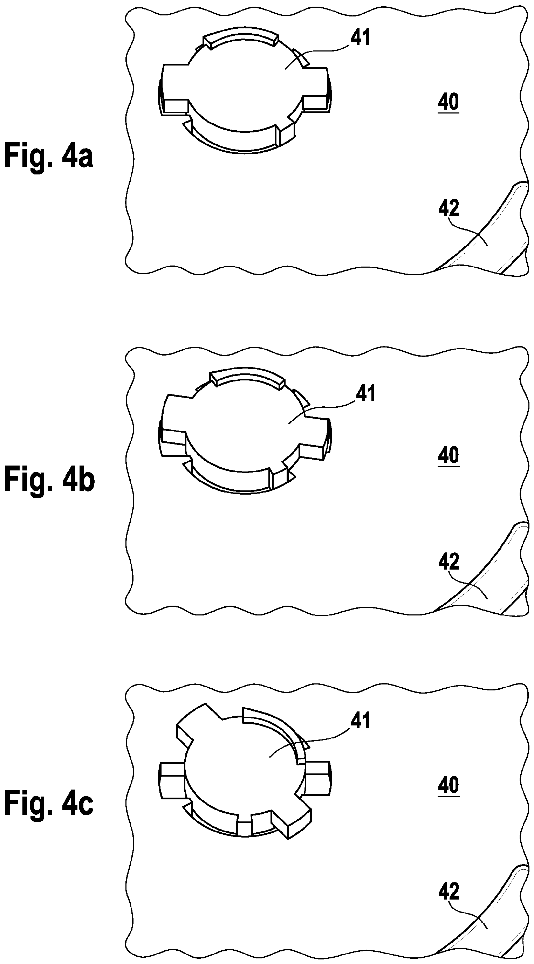

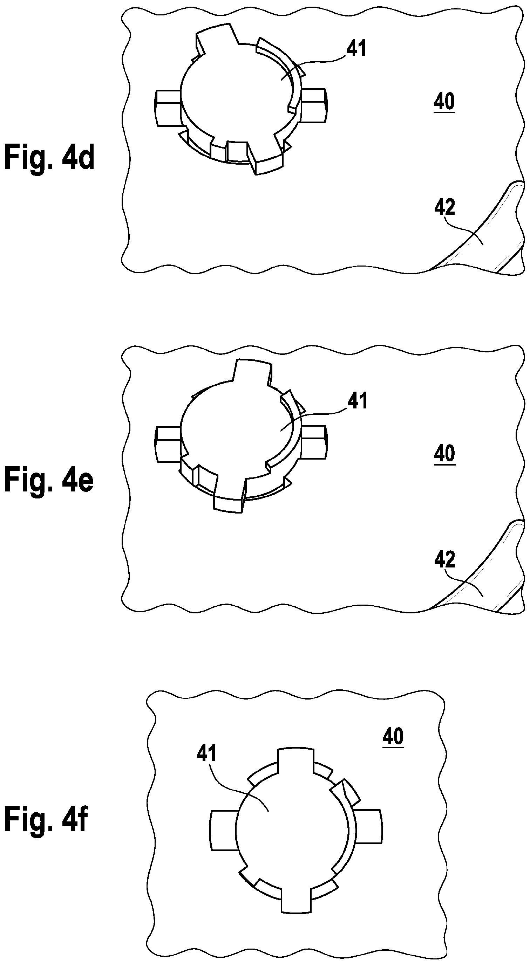

Figuren 4a bis f zeigen die verschiedenen Schritte beim Einbau des Unfallsensors von der Trockenraumseite. Auch hier sind gleiche Elemente mit gleichen Bezugszeichen bezeichnet.

Figur 4a zeigt, wie die Befestigungsmittel 41 durch die Wand 40 geführt wurden.

Ausschnittsmäßig ist der Falz 42 zu sehen. In Figur 4b wird der Sensor gedreht und zwar mit dem Uhrzeigersinn. In den Figuren c, d und e ist schrittweise das Drehen zu sehen, bis die Endposition in Figur 4e erreicht wurde. Fig. 4f zeigt in senkrechter Aufsicht ebenfalls den Unfallsensor von der Blechrückseite im verrasteten Zustand.

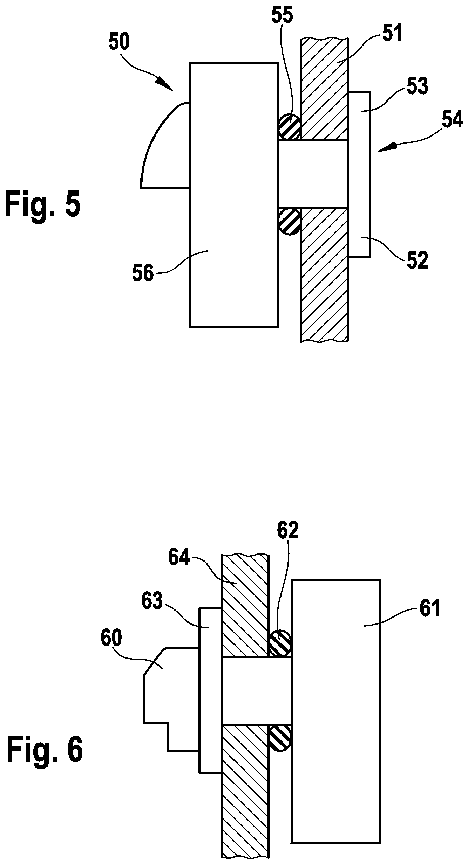

Figur 5 zeigt eine erste Ausführungsform des erfindungsgemäßen Unfallsensors in einer Seitenansicht. Dabei ist der Unfallsensor mit dem Hauptkörper 50 und dem Steckerteil 56 im Nassraum angeordnet. Die Dichtung 55 dichtet die Öffnung durch die Wand 51 gegen den Nassraum ab. Die Befestigungsmittel mit den Halteflügeln 52 und 53, hier mit 54 bezeichnet, halten den Sensor an der Wand 51. Aber auch die Dichtmittel 55, hier als Dichtring ausgebildet, nehmen einen Teil der Kraft, wie oben beschrieben, auf.

Figur 6 zeigt eine Alternative. Nunmehr sind die Befestigungsmittel 63 auf der Nassraumseite mit der Druckkanalvorrichtung 60 des Luftdrucksensors. Die Dichtung 62 ist nunmehr auf der Trockenraumseite und dichtet die Öffnung in der Wand 64 gegen den Trockenraum ab. Der Hauptkörper 61 des Luftdrucksensors befindet sich im Trockenraum. Dort erfolgt dann auch der Anschluss an die Kabel.

Befindet sich der Steckerteil des Luftdrucksensors im Nassraum, dann werden die Kabel dort auch angeschlossen, aber durch Durchführungen, die in der Wand in der Tür sowieso vorgesehen sind, dann in den Trockenraum weitergeführt.

## Patentansprüche

1. Fahrzeug mit einer Wand (20, 30, 40, 51, 64) und einem Unfallsensor (1) mit Befestigungsmitteln (13, 35, 41, 54, 63) für ein Fahrzeug, wobei die Befestigungsmittel (13, 35, 41, 54, 63) derart ausgebildet sind, dass zur Befestigung des Unfallsensors (1) die Befestigungsmittel (13, 35, 41, 54, 63) ein Einführen in eine Öffnung (21) in der Wand (20, 30, 40, 51, 64) und ein Drehen des Unfallsensors bis zu einer durch einen Anschlag definierten Endposition ermöglichen, wobei die Befestigungsmittel (13, 35, 41, 54, 63) in der Endposition ein Zurückdrehen des Unfallsensors verhindern
**dadurch gekennzeichnet, dass**
die Wand (20, 30, 40, 51, 64) einen Falz (22, 34, 42) aufweist, wobei der Falz (22, 34, 42) und der Unfallsensor (1) in Bezug auf die Öffnung (21) derart geformt sind, dass der Unfallsensor (1) aufgrund des Falzes (22, 34, 42) nur mit Kabeln verbindbar ist, wenn der Unfallsensor (1) in der Endposition ist, wobei der Falz (22, 34, 42) derart geformt ist, dass ein Anschließen der Kabel in einer anderen Position des Unfallsensors (1) als der Endposition verhindert ist.

2. Fahrzeug nach Anspruch 1, **dadurch gekennzeichnet, dass** die Befestigungsmittel (13, 35, 41, 54, 63) des Unfallsensors (1) eine mechanische Codierung aufweisen, die das Einführen des Unfallsensors in einer einzigen Winkellage erlaubt.

3. Fahrzeug nach Anspruch 2, **dadurch gekennzeichnet, dass** für die mechanische Codierung wenigstens ein Halteflügel (15, 16) an dem Unfallsensor vorgesehen ist.

4. Fahrzeug nach Anspruch 2, **dadurch gekennzeichnet, dass** zwei Halteflügel (15, 16) vorgesehen sind, wobei die Halteflügel unterschiedlich geformt sind.

5. Fahrzeug nach Anspruch 3 oder 4, **dadurch gekennzeichnet, dass** der wenigstens eine Halteflügel (15, 16) derart ausgebildet ist, dass der wenigstens eine Halteflügel den Unfallsensor im befestigten Zustand hält.

6. Fahrzeug nach einem der Ansprüche 1 bis 5, **dadurch gekennzeichnet, dass** der Unfallsensor ein Dichtmittel (55) aufweist, das die Öffnung (21) abdichtet.

7. Fahrzeug nach Anspruch 5 und 6, **dadurch gekennzeichnet, dass** die Dichtmittel (55) bezüglich ihrer Härte oder ihrer Form zur Haltekraftaufnahme mit dem wenigstens einen Halteflügel (15, 16) konfiguriert sind.

8. Fahrzeug nach einem der vorhergehenden Ansprüche, **dadurch gekennzeichnet, dass** die Befestigungsmittel wenigstens eine mechanische Rippe (14) aufweisen, die ein Drehen des Unfallsensors nur in einer Richtung nach dem Einführen ermöglicht.

9. Fahrzeug nach einem der vorhergehenden Ansprüche, **dadurch gekennzeichnet, dass** die Befestigungsmittel wenigstens eine Lasche (17) aufweisen, wobei die wenigstens eine Lasche in der Endposition einrastet und so ein Zurückdrehen verhindert.

10. Fahrzeug nach einem der vorhergehenden Ansprüche, **dadurch gekennzeichnet, dass** der Unfallsensor eine Markierung aufweist, die ein Erkennen der Endposition ermöglicht.

11. Fahrzeug nach einem der vorhergehenden Ansprüche, **dadurch gekennzeichnet, dass** der Unfallsensor über wenigstens eine Sicherungslasche verfügt, mittels der eine Befestigung durch wenigstens eine Schraube oder wenigstens eine Niet ermöglicht wird.

## Claims

1. Vehicle having a wall (20, 30, 40, 51, 64) and an accident sensor (1) with attachment means (13, 35, 41, 54, 63) for a vehicle, wherein the attachment means (13, 35, 41, 54, 63) are embodied in such a way that, in order to attach the accident sensor (1), the attachment means (13, 35, 41, 54, 63) permit insertion into an opening (21) in the wall (20, 30, 40, 51, 64) and rotation of the accident sensor up to an end position defined by a stop, wherein in the end position the attachment means (13, 35, 41, 54, 63) prevent the accident sensor from rotating back,
**characterized in that**
the wall (20, 30, 40, 51, 64) has a fold (22, 34, 42), wherein the fold (22, 34, 42) and the accident sensor (1) are shaped with respect to the opening (21) in such a way that owing to the fold (22, 34, 42) the accident sensor (1) can be connected to cables only if the accident sensor (1) is in the end position, wherein the fold (22, 34, 42) is shaped in such a way that connection of the cables in a position of the accident sensor (1) other than the end position is prevented.

2. Vehicle according to Claim 1, **characterized in that** the attachment means (13, 35, 41, 54, 63) of the accident sensor (1) have mechanical coding which permits the accident sensor to be inserted in a single winding layer.

3. Vehicle according to Claim 2, **characterized in that** at least one securing wing (15, 16) for the mechanical coding is provided on the accident sensor.

4. Vehicle according to Claim 2, **characterized in that** two securing wings (15, 16) are provided, wherein the securing wings are shaped differently.

5. Vehicle according to Claim 3 or 4, **characterized in that** the at least one securing wing (15, 16) is embodied in such a way that the at least one securing wing holds the accident senor in the attached state.

6. Vehicle according to one of Claims 1 to 5, **characterized in that** the accident sensor has a sealing means (55) which seals off the opening (21).

7. Vehicle according to Claims 5 and 6, **characterized in that** the sealing means (55) are configured with respect to their hardness or shape to take up a securing force with the at least one securing wing (15, 16).

8. Vehicle according to one of the preceding claims, **characterized in that** the attachment means have at least one mechanical fin (14) which permits the accident sensor to rotate only in one direction after the insertion.

9. Vehicle according to one of the preceding claims, **characterized in that** the attachment means have at least one clip (17), wherein the at least one clip latches in the end position and therefore prevents rotating back.

10. Vehicle according to one of the preceding claims, **characterized in that** the accident sensor has a mark which permits the end position to be detected.

11. Vehicle according to one of the preceding claims, **characterized in that** the accident sensor has at least one fastening clip which makes possible attachment by means of at least one screw or at least one rivet.

## Revendications

1. Véhicule présentant une paroi (20, 30, 40, 51, 64) et un détecteur d'accident (1) comportant des éléments de fixation (13, 35, 41, 54, 63) à un véhicule, dans lequel les éléments de fixation (13, 35, 41, 54, 63) sont conçus de telle sorte que, pour fixer le capteur d'accident (1), les éléments de fixation (13, 35, 41, 54, 63) permettent une insertion dans une ouverture (21) ménagée dans la paroi (20, 30, 40, 51, 64) et une rotation du capteur d'accident jusqu'à une position terminale définie par une butée, dans lequel les éléments de fixation (13, 35, 41, 54, 63) empêchent une rotation en arrière du détecteur d'accident jusqu'à une position terminale,
**caractérisé en ce que**
la paroi (20, 30, 40, 51, 64) présente un pli (22, 34, 42), dans lequel le pli (22, 34, 42) et le détecteur d'accident (1) sont formés par rapport à l'ouverture (21) de telle sorte que le détecteur d'accident (1) ne puisse être raccordé à des câbles en raison du pli (22, 34, 42) que lorsque le détecteur d'accident (1) est dans la position finale, dans lequel le pli (22, 34, 42) est formé de telle sorte qu'un raccordement des câbles soit empêchée dans une position du détecteur d'accident (1) autre que la position terminale.

2. Véhicule selon la revendication 1, **caractérisé en ce que** les éléments de fixation (13, 35, 41, 54, 63) du détecteur d'accident (1) présentent un codage mécanique permettant l'insertion du détecteur d'accident dans une position angulaire unique.

3. Véhicule selon la revendication 2, **caractérisé en ce que**, pour le codage mécanique, il est prévu au moins une aile de retenue (15, 16) sur le détecteur d'accident.

4. Véhicule selon la revendication 2, **caractérisé en ce qu'**il est prévu deux ailes de retenue (15, 16), dans lequel les ailes de retenue présentent une forme différente.

5. Véhicule selon la revendication 3 ou 4, **caractérisé en ce que** ladite au moins une aile de retenue (15, 16) est configurée de telle sorte que ladite au moins une aile de retenue maintienne le détecteur d'accident dans un état fixé.

6. Véhicule selon l'une des revendications 1 à 5, **caractérisé en ce que** le détecteur d'accident comprend des éléments d'étanchéité (55) fermant l'ouverture (21) de manière étanche.

7. Véhicule selon les revendications 5 et 6, **caractérisé en ce que** les éléments d'étanchéité (55) sont configurés en fonction de leur dureté ou de leur forme pour recevoir une force de maintien par l'intermédiaire de ladite au moins une aile de maintien (15, 16).

8. Véhicule selon l'une des revendications précédentes, **caractérisé en ce que** les éléments de fixation comprennent au moins une nervure mécanique (14) permettant de ne faire tourner le détecteur d'accident que dans un seul sens après son insertion.

9. Véhicule selon l'une des revendications précédentes, **caractérisé en ce que** les éléments de fixation comprennent au moins une patte (17), dans lequel ladite au moins une patte s'engage dans la position terminale et empêche ainsi une rotation en arrière.

10. Véhicule selon l'une des revendications précédentes, **caractérisé en ce que** le détecteur d'accident comporte un repère permettant de reconnaître la position terminale.

11. Véhicule selon l'une des revendications précédentes, **caractérisé en ce que** le détecteur d'accident comporte au moins une patte de fixation au moyen de laquelle la fixation est rendue possible par au moins une vis ou au moins un rivet.
